# EUROPEAN PATENT APPLICATION

(11) **EP 4 564 650 A1**
(43) Date of publication of application: **04.06.2025**
(21) Application number: 23213335.5
(22) Date of filing: 30.11.2023
(51) Int. Cl.: H02J 50/80, H02J 50/10, H02J 50/12, H04B 5/79

(54) **WIRELESS POWER TRANSFER**

(71) Applicant: Koninklijke Philips N.V., 5656 AG Eindhoven (NL)
(72) Inventor: DRAAK, Johannes Wilhelmus, 5656 AG Eindhoven (NL); AGAFONOV, Aleksei, 5656 AG Eindhoven (NL); LEBENS, Pascal Leonard Maria Theodoor, 5656 AG Eindhoven (NL)
(74) Representative: Philips Intellectual Property & Standards

(57) **Abstract**

A power transmitter (101) wirelessly provides power to a power receiver (105) via an inductive power transfer signal. The power transmitter (101) comprises a communication coil (207) that generates a communication carrier signal generated in response to a drive signal generated and modulated by a communication unit (205). The power receiver may during startup extract power from the communication carrier signal to power communication circuitry. A measurer (209) repeatedly measures an impedance property for the communication coil (207) where the impedance property is dependent on an impedance of the communication coil (207). A detector (211) detects a steady state condition in response to the impedance property measurements meeting a steady state criterion. A controller (203) initializes communication in response to the detection of the steady state condition. The approach may reduce delays in starting communication between the power transmitter and power receiver.

## Description

### FIELD OF THE INVENTION

The invention relates to wireless power transfer and in particular, but not exclusively, to wireless power transfer systems operating in accordance with elements of the Ki wireless power transfer Specifications.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. In order to provide a significantly improved user experience, it has been proposed to use a wireless power supply wherein power is inductively transferred from a transmitter coil in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain). Based on the Qi Specification, an approach known as the Ki specification is being developed for high power applications, such as specifically for Kitchen appliances.

Most wireless power transfer systems, including Qi and Ki based system, are designed to operate with a variety of different devices having very different properties including different power extraction circuits and arrangements.

A key operating property of wireless transfer systems in order to provide a desirable user experience is for the power transfer operation to be performed quickly and efficiently. It is in particular desired that operational delays and user inconveniences are minimized as far as is possible. For example, it is desired that power transfer is initialized as fast as possible and without any undue inconvenience. Thus, communication must be established fast in order to support initiation of the power transfer.

In systems such as Ki, it has been proposed to use a separate communication path to the main power transfer path. In order to support fast and user friendly power operation it is desired that this communication is fast and efficient.

Other desired properties of a wireless power transfer system are that power consumption and losses are kept low and that a user friendly experience is provided.

However, most wireless power transfer systems have been found to have less then optimum performance. For example, it has been found that losses are higher than preferred or that operation is slower than ideally preferred. For example, power transfer start-up or standby operation may in some cases be suboptimal.

For example, in order to ensure reliable operation, delays and operational parameters may be determined to ensure reliable and virtually fault free operation in most cases. However, such an approach may not result in optimum performance in all cases as often the design is such that worst case conditions does not lead to faulty operation.

Hence, an improved wireless power transfer approach would be advantageous, and in particular, an approach allowing increased flexibility, reduced cost, reduced complexity, improved power transfer operation, increased reliability, increased efficiency, improved power control, improved adaptability to different device properties/characteristics, reduced delay, faster response times, an improved user experience and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention, there is provided a power transmitter for wirelessly providing power to a power receiver via an inductive power transfer signal, the power transmitter comprising: a power transfer coil arranged to generate the power transfer signal; a power transfer driver arranged to generate a power transfer drive signal for the power transfer coil to generate the power transfer signal during a power transfer phase; a communication coil arranged to generate a communication carrier signal; a communication unit arranged to communicate with the power receiver using modulation of the communication carrier signal, the communication unit being arranged to generate a drive signal for the communication coil to generate the communication carrier signal; a measurer arranged to measure an impedance property for the communication coil, the impedance property being a property dependent on an impedance of the communication coil; a detector arranged to detect a steady state condition in response to/when/if the impedance property meeting a steady state criterion; and a controller arranged to initialize communication in response to the detection of the steady state condition.

The invention may allow improved performance and/or operation and/or implementation in many embodiments. It may allow an overall improved power transfer operation in many systems and embodiments.

The approach may in particular allow a reduced delay and faster initiation of communication between the power transmitter and the power receiver. The approach may allow a faster start of communication following the switching on of the communication carrier signal. The approach may in particular allow a faster start-up of communication with a power receiver that is (at least partially) powered by extracting power from the communication carrier signal (at least during start-up).

The approach may allow for a delay in initiating communication being adapted to the specific current conditions and the specific properties of the specific power receiver. It may avoid the necessity of a delay corresponding to worst case conditions and power receivers being necessary. In particular, typically a number of initialization and startup operations are required in order to successfully initiate power transfer and although power transfer devices comply with defined specifications, there may be very substantial differences in the specific characteristics, properties, and configurations of the individual device.

Accordingly, a customization, configuration, and adaptation are typically required before power transfer can be started and this typically introduces an undesired delay. In the current approach such issues may be mitigated by allowing the communication to be started much earlier than otherwise feasible. Indeed, rather than delay communication until it is guaranteed that communication can occur for worst-case situations and devices (such as for example by setting time intervals for various operations to be determined by the slowest possible response times) the current approach may typically dynamically and adaptively adjust the delays to be appropriate for the specific power receiver and configuration. This may reduce delays before communication can start substantially and accordingly reduce the delay when starting power transfer operation. This may substantially improve the performance and/or user experience.

The approach may provide a secondary/ auxiliary power transfer path utilizing a communication path thereby providing a synergistic interoperability between communication and auxiliary power provision. It may in particular allow an efficient provision of power for circuitry for initiating power transfer, such as specifically communication functionality. It may achieve this while providing the previously mentioned advantages of reduced delays in establishing communication, and possibly in establishing a new power transfer.

The approach may in particular dynamically adapt the time/delay introduced to ensure that the power receiver extracts sufficient power to be able to power up the required communication functionality/circuitry to enable communication.

The approach may allow faster operation and/or an improved user experience in many scenarios. It may in many scenarios provide reduced power consumption, in particular a substantial power reduction may often be achieved for a standby phase in which frequent poll or ping attempts are made by the power transmitter in order to check with power transfer is required or desired from a power receiver that is continuously present but not requesting power.

The controller may be arranged to adapt an operation of the power transmitter in dependence on the communication, and specifically the controller may be arranged to adapt a property of the power transfer signal/power transfer drive signal in dependence on communication with the power receiver.

In accordance with an optional feature of the invention, the steady state condition includes a requirement that a variation of the impedance property meets a steady state requirement.

This may allow particularly advantageous operation and adaptation in many embodiments. It may typically allow improved and/or faster communication and communication establishment. In many scenarios reduced power consumption may be achieved. The feature may provide a particularly suitable detection of a condition existing that allows communication to be performed.

In many embodiments, the detector is arranged to detect the steady state condition in response to(/when/if) a variation/change in the impedance property meeting(meets) a steady state criterion.

In accordance with an optional feature of the invention, the steady state condition includes a requirement that a derivative of the impedance property meets a steady state requirement.

This may allow particularly advantageous operation and adaptation in many embodiments. It may typically allow improved and/or faster communication and communication establishment. In many scenarios reduced power consumption may be achieved. The feature may provide a particularly suitable detection of a condition existing that allows communication to be performed.

In many embodiments, the detector is arranged to detect the steady state condition in response to(/when/if) a derivative of the impedance property meeting(meets) a criterion.

In accordance with an optional feature of the invention, the impedance property is a level of an input current to a(n output) circuit of the communication driver.

This may allow particularly advantageous operation and adaptation in many embodiments. The feature may allow a particularly advantageous parameter to be considered that allow a more practical and/or reliable determination of conditions that allow communication, and it may typically allow improved and/or faster communication and communication establishment. The approach may often provide facilitated implementation and/or operation. An input current may be particularly easy and more practical to measure than many other signals and properties.

In accordance with an optional feature of the invention, the impedance property is a current amplitude for a current of the communication coil.

This may allow particularly advantageous operation and adaptation in many embodiments. The feature may allow a particularly advantageous parameter to be considered that allow a more practical and/or reliable determination of conditions that allow communication, and it may typically allow improved and/or faster communication and communication establishment. The approach may often provide facilitated implementation and/or operation. In accordance with an optional feature of the invention, the impedance property is a voltage amplitude of a voltage of the communication coil.

This may allow particularly advantageous operation and adaptation in many embodiments. The feature may allow a particularly advantageous parameter to be considered that allow a more practical and/or reliable determination of conditions that allow communication, and it may typically allow improved and/or faster communication and communication establishment. The approach may often provide facilitated implementation and/or operation.

In accordance with an optional feature of the invention, the criterion comprises a requirement that a variation of the impedance property is below a given threshold for a given duration.

This may be a particularly advantageous steady state requirement/criterion in many practical embodiments. It has been found to allow a reliable and useful determination of when communication can be established.

In accordance with an optional feature of the invention, the given duration is no less than 10 usec and no more than 1 milisec.

This may allow particularly advantageous operation and adaptation in many embodiments and has been found to provide a reliable detection of when communication can be established in many practical scenarios.

In accordance with an optional feature of the invention, the impedance property is an amplitude of a voltage of the communication coil and the given threshold is no less than 2V and no more than 100V.

This may allow particularly advantageous operation and adaptation in many embodiments and has been found to provide a reliable detection of when communication can be established in many practical scenarios.

In some embodiments, the impedance property is an amplitude of a voltage of the communication coil and the given threshold is no less than 2V/5V/10V/20V and no more than 100 V/5 0 V/30 V/20 V.

In accordance with an optional feature of the invention, the impedance property is an amplitude of a current through the communication coil and the given threshold is no less than 10mA and no more than 2A.

This may allow particularly advantageous operation and adaptation in many embodiments and has been found to provide a reliable detection of when communication can be established in many practical scenarios.

In accordance with an optional feature of the invention, the impedance property is an amplitude of a current through the communication coil and the given threshold is no less than 10mA, 20mA, 50mA, 100mA, 200mA, 500mA and no more than 1A, 2A, 5A, 10A.

In accordance with an optional feature of the invention, the impedance property is an input current to the communication unit and the given threshold is no less than 5mA and no more than 400mA.

This may allow particularly advantageous operation and adaptation in many embodiments and has been found to provide a reliable detection of when communication can be established in many practical scenarios.

In accordance with an optional feature of the invention, the impedance property is an amplitude of a current through the communication coil and the given threshold is no less than 2mA, 5mA,10mA, 20mA, 50mA, 100mA, 200mA and no more than 50mA, 100mA, 200mA, 300mA, 400mA, 500mA, 750mA, 1A.

In accordance with an optional feature of the invention, the power transmitter is arranged to operate in a standby phase in which no power transfer is performed via the power transfer signal and in which operation is switched between power down time intervals in which no communication carrier signal is generated and communication time intervals in which the communication carrier signal is generated, and where the measurer is arranged to measure the impedance property, the detector is arranged to detect the steady state condition, and the controller is arranged to initialize communication during communication time intervals of the standby phase.

This may allow particularly advantageous operation and adaptation in many embodiments. The approach may in many such systems substantially reduce power consumption during the standby phase.

In accordance with an optional feature of the invention, the communication unit is arranged to communicate with the power receiver using Near Field Communication, NFC.

This may allow particularly advantageous operation and adaptation in many embodiments.

According to another aspect of the invention, there is provided a method of operation for a power transmitter wirelessly providing power to a power receiver via an inductive power transfer signal, the power transmitter comprising: a power transfer coil generating the power transfer signal; generating a power transfer drive signal for the power transfer coil to generate the power transfer signal during a power transfer phase; a communication coil generating a communication carrier signal; generating a drive signal for the communication coil to generate the communication carrier signal; communicating with the power receiver using modulation of the communication carrier signal; measuring an impedance property for the communication coil, the impedance property being a property dependent on an impedance of the communication coil; detect a steady state condition in response(/when/if) the (measured) impedance property (measurements) meeting a steady state criterion; and initializing communication in response to the detection of the steady state condition.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
FIG. 1 illustrates an example of elements of a power transfer system in accordance with some embodiments of the invention;
FIG. 2 illustrates an example of elements of a power transmitter in accordance with some embodiments of the invention;
FIG. 3 illustrates an example of elements of a power receiver in accordance with some embodiments of the invention;
FIG. 4 illustrates an example of an equivalent circuit of a driver for generating a communication carrier drive signal in a power transmitter in accordance with some embodiments of the invention;
FIG. 5 illustrates an example of an equivalent circuit of a power extraction circuit for a power receiver in accordance with some embodiments of the invention;
FIG. 6 illustrates an example of some signals for a start up of a communication carrier signal in a power transfer system in accordance with some embodiments of the invention;
FIG. 7 illustrates an example of an equivalent circuit of a power extraction circuit for a power receiver in accordance with some embodiments of the invention; and
FIG. 8 illustrates an example of some signals for a start up of a communication carrier signal in a power transfer system in accordance with some embodiments of the invention.

### DETAILED DESCRIPTION OF THE EMBODIMENTS

The following description focuses on embodiments of the invention applicable to a wireless power transfer system utilizing a power transfer approach such as known from the Ki specification. However, it will be appreciated that the invention is not limited to this application but may be applied to many other wireless power transfer systems.

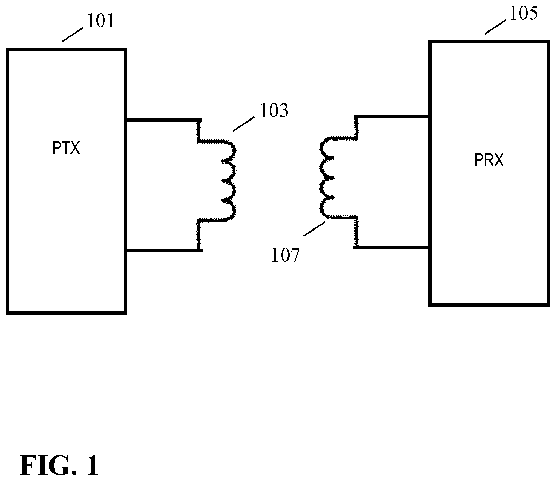

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may correspond to the electromagnetic power transfer component representing the energy transfer from the power transmitter to the power receiver, and may be considered to correspond to the component of the generated electromagnetic field that transfers power from the power transmitter to the power receiver. For example, if there is no loading of the receive coil 107, no power will be extracted by the power receiver from the generated electromagnetic field (apart from losses). In such a scenario, the driving of the transmitter coil 103 may generate an electromagnetic field of potentially high field strength but the power level of the power transfer signal will be zero (apart from losses). In some situations, where a foreign object is present, the power transfer signal may be considered to include a component corresponding to the power transfer to the foreign object, and thus the power transfer signal may be considered to correspond to the power being extracted from the electromagnetic field generated by the power transmitter.

The power transfer signal may typically have a frequency between around 20 kHz to around 500 kHz, and for Ki compatible systems typically in the range between 20kHz to 80kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element. The power receiver may accordingly provide a load to the power transfer signal by comprising an inductive power extraction element which specifically may be a power extraction coil or an electrical (e.g. heating) element in which current is induced by the power transfer signal.

The system is arranged to transfer substantial power levels, and specifically the power transmitter may support power levels in excess of 50W, 100W, 500W, or 1 kW. For example, for Ki type applications, the power transfers may often be in excess of 100 W, and may be up to more than 2500W for very high power applications.

In the following, the operation of the power transmitter 101 and the power receiver 105 will be described with specific reference to an embodiment generally in accordance with the Specifications (except for the herein described (or consequential) modifications and enhancements) being developed by the Wireless Power Consortium. In particular, the power transmitter 101 and the power receiver 105 may follow, or substantially be compatible with, elements of the Ki Standards.

Many wireless power transfer systems, and in particular high power systems such as Ki, utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

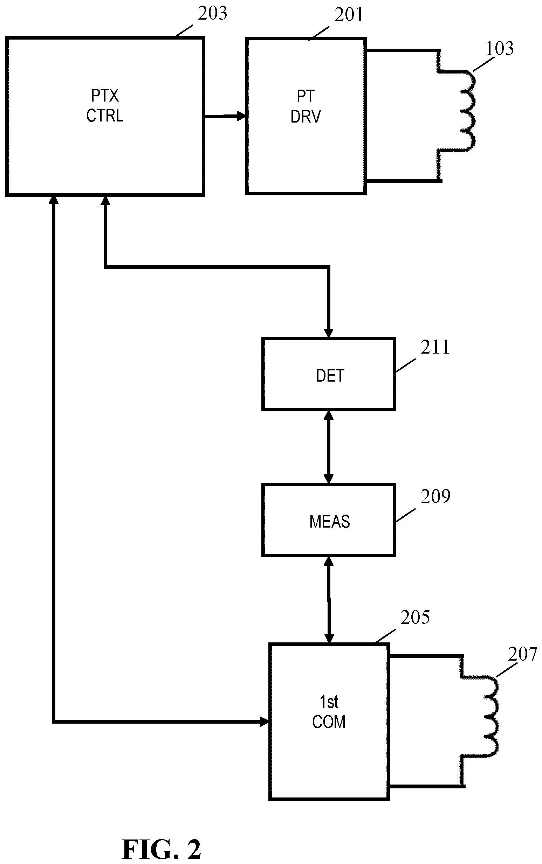

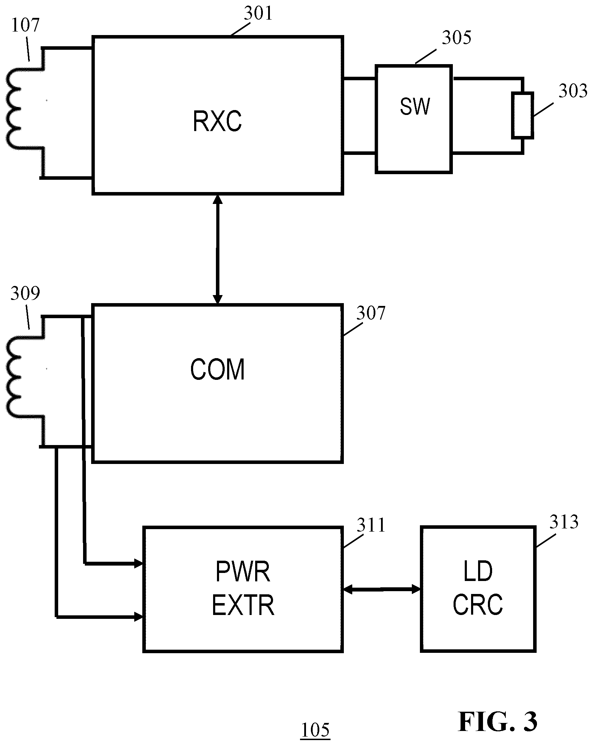

FIG. 2 illustrates elements of the power transmitter 101 and FIG. 3 illustrates elements of the power receiver 105 of FIG. 1 in more detail.

The power transmitter 101 includes a driver 201 which can generate a drive signal that is fed to the transmitter coil 103 which in return generates the electromagnetic power transfer signal, which provides a power transfer to the power receiver 105. The power transfer signal is provided (at least) during power transfer time intervals of the power transfer phase.

The driver 201 may typically comprise an output circuit in the form of an inverter, typically formed by driving a full or half bridge as will be well known to the skilled person.

The power transmitter 101 further comprises a power transmitter controller 203 which is arranged to control the operation of the power transmitter 101 in accordance with the desired operating principles. Specifically, the power transmitter 101 may include many of the functionalities required to perform power control in accordance with the Qi or Ki Specifications.

The power transmitter controller 203 is in particular arranged to control the generation of the drive signal by the driver 201, and it can specifically control the power level of the drive signal, and accordingly the level of the generated power transfer signal. The power transmitter controller 203 comprises a power loop controller controlling a power level of the power transfer signal in response to the power control messages received from the power receiver 105 during the power control phase. The operation of the power transmitter controller 203, and in particular the power transfer operation, is in general dependent on the communication between the power transmitter and the power receiver.

In order to receive data and messages from the power receiver 105, the power transmitter 101 comprises a first communicator 205 which is arranged to receive data and messages from the power receiver 105 as well as transmit data and messages to the power receiver 105 (as will be appreciated by the skilled person, a data message may provide one or more bits of information).

In the approach, the communication is performed by modulation of a communication carrier signal that is generated by a first communication coil 207. The first communicator 205 specifically comprises a driver/output circuit which is coupled to the first communication coil 207 and which generates a communication drive signal that is fed to the first communication coil 207 to generate the communication carrier signal. The first communicator 205 may typically be arranged to generate the communication drive signal/communication carrier signal to have a substantially different frequency than the power transfer drive signal/ power transfer signal. In many embodiments, the frequency of the communication carrier signal may be no less than 10, 100, or 500 times higher than the frequency of the power transfer signal. In many embodiments, the frequency of the communication drive signal/ communication carrier signal may have a frequency of no less than 500kHz, 1 MHz, or 10 MHz. Specifically for an NFC implementation, the communication carrier signal frequency may be 13.56 MHz.

The first communicator 205 is arranged to modulate the communication drive signal/ communication carrier signal in order to transmit data to the power receiver (in the following references to the communication drive signal also include the implicit reference to the communication carrier signal as appropriate).

The modulation is in the specific example an amplitude modulation of the communication drive signal, and specifically a binary communication using Amplitude Shift Keying (ASK) is used. However, it will be appreciated that in other embodiments, the modulation may use other approaches, such as phase or frequency modulation of the communication drive signal.

In some embodiments, the first communicator 205 may for example receive data to be transmitted to the power receiver from the power transmitter controller 203 and in response generate the communication drive signal to have corresponding amplitude variations.

For communication from the power receiver to the power transmitter, the modulation of the communication drive signal may be a load modulation. The power receiver may be arranged to modulate the communication carrier signal by varying a loading of the the communication carrier signal generated by the first communication coil 207 in accordance with the data to be transmitted. The first communicator 205 may be arranged to sense variations in the voltage and/or current of the first communication coil 207 and to demodulate the load modulation based on these. The skilled person will be aware of the principles of load modulation and therefore these will not be described in further detail.

In many embodiments, the communication may be in accordance with the Near Field Communication, NFC, Specifications and the power receiver may specifically include NFC functionality. In many embodiments, the first communicator 205 and first communication coil 207 may implement (at least) the functionality of an NFC reader. Thus, in many embodiments, the communication drive signal/ communication carrier signal is a constant level (except for modulation) 13.56 MHz signal.

The following description will focus on examples where the communication between the power transmitter and power receiver is by NFC communication and specifically where modulation of the NFC carrier in the direction from the power transmitter to the power receiver is by Amplitude Shift Keying (ASK) and modulation of the NFC carrier in the direction from the power receiver to the power transmitter is by load modulation.

FIG. 3 illustrates some exemplary elements of the power receiver 105.

The receiver coil 107 is coupled to a power receiver controller 301 which couples the receiver coil 107 to a load 303 via a switch 305 (i.e. it is a switchable load 305). The power receiver controller 301 includes a power control path which converts the power extracted by the receiver coil 107 into a suitable supply for the load 303. In addition, the power receiver controller 301 may include various power receiver controller functionality required to perform power transfer, and in particular functions required to perform power transfer in accordance with the Qi or Ki Specifications.

In order to support communication from the power receiver 105 to the power transmitter 101 the power receiver 105 comprises a second communicator 307 and a second communication coil 309. The second communication coil 309 is arranged to couple to the first communication coil 207 and thus the communication carrier signal induces a current (at least an emf) in the second communication coil 309.

The second communicator 307 is coupled to the second communication coil 309 and is arranged to determine amplitude variations in the induced signal and to demodulate amplitude modulations of the communication carrier signal. Thus, the second communicator 307 is arranged to decode data transmitted from the power transmitter by amplitude modulation of the communication carrier signal. It will be appreciated that in other embodiments, the second communicator 307 may be arranged to decode data modulated onto the communication carrier signal using other modulation formats such as frequency or phase modulation.

The second communicator 307 is further arranged to load modulate the communication carrier signal in order to transmit data from the power receiver to the power transmitter. Specifically, the second communicator 307 may comprise a load (such as a capacitor) which depending on the data to transmit can be switched between being coupled to the second communication coil 309 and not being coupled to the second communication coil 309. These load modulations may then be detected by the first communicator 205 of the power transmitter.

In the specific example, the second communication coil 309 and the second communicator 307 may provide NFC compatible communication operation. Specifically, the second communication coil 309 may be arranged to provide functionality corresponding to an NFC tag and to decode data that has been ASK modulated onto the communication carrier signal in accordance with the NFC specifications.

Thus, the second communicator 307 is arranged to transmit data to the power transmitter by varying the loading of the second communication coil 309 in response to data to be transmitted to the power transmitter 101. The load variations are then detected and demodulated by the power transmitter 101 as will be known to the person skilled in the art.

In the example, the second communicator 307 is furthermore arranged to demodulate amplitude, frequency, and/or phase modulation of the communication carrier signal in order to retrieve data transmitted from the power transmitter.

The communication carrier signal may in addition to the communication also provide for an auxiliary power provision from the power transmitter to the power receiver. The auxiliary power transfer/ path may provide a low power supply that may be used to supply internal circuitry such as a user interface or power receiver control functionality. This may in particular be suitable for providing reduced power to the power receiver outside of the power transfer phase.

The communication carrier signal may accordingly be used to provide a second low level power transfer path from the power transmitter to the power receiver. To support this, the power receiver comprises a power extractor 311 which is arranged to extract power from the communication carrier signal. In the specific example, the power extractor 311 may accordingly extract power from the NFC carrier signal. The power extractor 311 is coupled to a load circuit 313 which may be provided by power extracted from the communication carrier signal by the power extractor 311. The load circuit 313 may typically be a control logic/ support function/ circuit of the power receiver, and/or may include a user interface of the power receiver. The load circuit 313 may for example include or consist in elements of the power receiver controller 301 and/or second communicator 307.

In particular, the power extracted from the communication carrier signal may power the communication circuitry (or at least some of this), at least during initial start up communication. Thus, when a communication carrier signal is present, the power receiver may extract power from this communication carrier signal in order to power the communication functionality of the power receiver which allows this to communicate with the power transmitter.

Thus, power may be provided from the power transmitter to the power receiver via communication carrier signal/ NFC carrier power harvesting. This may provide power to low power level, and e.g. low voltage electronics, such as the NFC hardware or a user interface. For example, for an NFC implementation, the extracted power may be up to around 200 mW.

Communication between the power transmitter and power receiver is required for most power transfer operations. Typically, establishing communication between the devices is (one of) the first operations that are performed when a new power receiver is presented to the power transmitter and/or when the power transmitter is powered on. In many cases, no other operations are performed until the communication is effectively established and data can be exchanged between the devices.

For example, when the power transmitter detects that a new power receiver has been positioned for power transfer, it immediately proceeds to establish communication in order to determine whether power transfer is required and if so the communication forms an integral part of the initialization of the power transfer. Similarly, when the power transmitter is powered on with a power receiver being present, the power transmitter proceeds to seek to establish communication and may subsequently seek to proceed to initialize power transfer.

A particular situation may for example occur in a standby phase where the power receiver may continuously present be but without requesting power. For example, a blender or kettle may be placed in a power transfer position but without being switched on. At some point, a user may activate the device resulting in a desire for a quick initialization of a power transfer operation to operate the device. In order to reduce the delay, it is accordingly desired that the communication is established as quickly as possible.

In such cases, the power transmitter may be arranged to be switched off for the majority of time while at regular intervals wake up to initialize a communication with the power receiver to detect if this requires power. It may then switch off again if no power transfer is required. If instead power transfer is required, the power transmitter proceeds to initialize this. In such cases, it is desired that communication is established quickly in order to minimize the delay in initializing the power transfer or often more importantly to reduce the time the communication carrier signal is on in cases where no power transfer is required. Thus, it is highly desirable that communication is established very quickly to determine whether power transfer is required. The necessary time for the power transmitter to determine if power transfer is required is typically directly determined by the time it takes to establish communication. Typically, the power transmitter may ping the power receiver frequently and therefore a fast communication establishment is required to maintain low power consumption during the standby phase. This may be a critical property as regulatory requirements often have very strict conditions for such standby power consumption.

It is thus highly desirable for the communication establishment to be very quick. However, in order to perform communication in systems where the power receiver may extract the required power from the communication carrier signal, it is typically necessary for enough energy to first be provided to charge up a capacitor being part of the power extraction circuit. In order to ensure that this is achieved before communication is started, a minimum delay before communication is begun is often introduced. This minimum delay is designed as a worst case delay to ensure that all power receivers are guaranteed to be able to be operational and ready to communicate. However, this increases the delay and associated standby power consumption.

In most systems, such as Ki systems, in order to start communication between the power transmitter and power receiver, both devices need to have a suitable power supply. The power transmitter is typically mains connected and its microcontroller and communication circuitry is always more or less in an on/standby state. The power receiver has typically no direct power supply, but when placed within power transfer range of a power transmitter, the power receiver may extract power from the NFC carrier signal. In particular, when the NFC communication carrier is switched on, a power harvester of the power receiver may proceed to extract power from the communication carrier. It may first slowly start to charge a buffer/smoothing capacitor with the charging speed depending on the size of the capacitor. When a certain voltage at the buffer capacitor is reached, the microcontroller/ communication circuit of the power receiver can be turned on allowing communication to start. Typically, a fixed predetermined time interval/delay is introduced to ensure that this happens. Currently in the Ki Specification, a fixed time interval of a minimum of 25msec is required before communication can be attempted. However, this limits the speed at which many operations can be performed.

The Inventors have realized that such an approach inherently is based on a worst case consideration and that a faster communication establishment can often be achieved. They have realized that rather than using a worst case time interval, the timing can be adapted to the specific power receiver and the current conditions. The Inventors have realized that the duration before the buffer/smoothing capacitor is charged may depend on various issues such as the buffer capacitor size, the current coupling between the communication coils etc., and that therefore the exact moment at which communication can be enabled is in practice typically not known or predictable. However, in many cases it would be possible to establish communication earlier than the prescribed delay of 25ms.

The power transmitter of FIG. 2 is arranged to dynamically adapt the timing/delay to reflect the current conditions such as specifically the characteristics of the power receiver (in particular the buffer capacitor properties) and the power transfer conditions (in particular the coupling between the communication coils). Further, the power transmitter is arranged to perform such adaptation without requiring that the power receiver communicates any specific property or performs any specific operation. Rather, the detection is based only on the power transmitter operations and measurements. This may for example allow improved backwards compatibility and facilitate the introduction of the functionality to existing systems.

The power transmitter of FIG. 2 comprises a measurer 209 which is arranged to repeatedly measure an impedance property for the communication coil 207. The impedance property is a property that is dependent on an impedance of the communication coil 207. The measurer 209 may measure a property of a signal that is dependent on the impedance of the communication coil 207. The impedance property is indicative of the impedance of the communication coil 207. The impedance property may for example be a property (such as a value/amplitude/level) of a current through the communication coil 207, a voltage over the communication coil 207, or an input current (to a(n output) circuit) of the first communicator 205.

The measurer 209 may repeatedly measure the impedance property, and in many cases may measure the impedance property periodically. For example, in many practical implementations, the measurer 209 may be arranged to (during a detection phase) measure the impedance property with an interval between measurements (when seeking to detect a steady state transition) not exceeding 10µsec, 100µsec, 500µsec, 1msec, 10msec, or even in some cases 100msec. Thus, during a detection phase, in which the power transmitter generates a communication carrier signal but no steady state condition has been detected, the measurer 209 may repeatedly perform measurements of the impedance property, and typically with a relatively high frequency.

The impedance of the communication coil 207 is dependent on the loading of the communication coil 207, and specifically is dependent on the loading of the communication coil 207 by the power receiver and the second communication coil 309. In particular, the power extraction/harvesting by the power receiver directly impacts the impedance of the communication coil 207 (for example an increasing amount of resistive power being extracted results in an increasing resistive value of the impedance of the communication coil 207).

The impedance property being indicative of the impedance of the communication coil may specifically be a loading property being a property dependent on a loading of the communication coil. The references to impedance (impedance property) may accordingly be replaced by reference to a loading (loading property).

The measurer 209 is coupled to a detector 211 which is arranged to detect a steady state condition for the extraction of power from the communication carrier signal by the power receiver. The detector 211 is arranged to detect the steady state condition by detecting that the measured impedance property meets a given steady state criterion. The steady state criterion may include or consist in a requirement that the change in the impedance measurement is less than a given threshold for a given duration. The detector may thus detect that the power extraction is substantially stable over a given duration.

The detector 211 is coupled to the power transmitter controller 203 which is arranged to initialize communication in response to the detection of the steady state condition. The detector 211 is arranged to initialize communication when the steady state condition is detected.

The power transmitter controller 203 may be arranged to start communication with the power receiver once the steady state condition has been detected.

The functionality may in many scenarios allow a faster initialization of communication and in particular may reduce the delay of communication following the communication carrier signal being switched on. In particular, in many scenarios, rather than introducing a fixed worst case delay, the communication may be initialized as soon as the power receiver communication functionality has reached a state where it is ready to communicate, i.e. specifically when it has been powered sufficiently to perform communication. The approach may adapt the communication operation to the specific properties and characteristics of the individual power receiver as well as to the current conditions, such as the current coupling factor.

The approach may improve the user experience by reducing the delay and may also in many scenarios reduce power consumption. In particular, in a standby scenario where the power transmitter frequently wakes up to briefly communicate with the power receiver before again powering down, the reduced delay may vary substantially decrease the standby power consumption which in many cases may facilitate or enable compliance with the regulatory requirements.

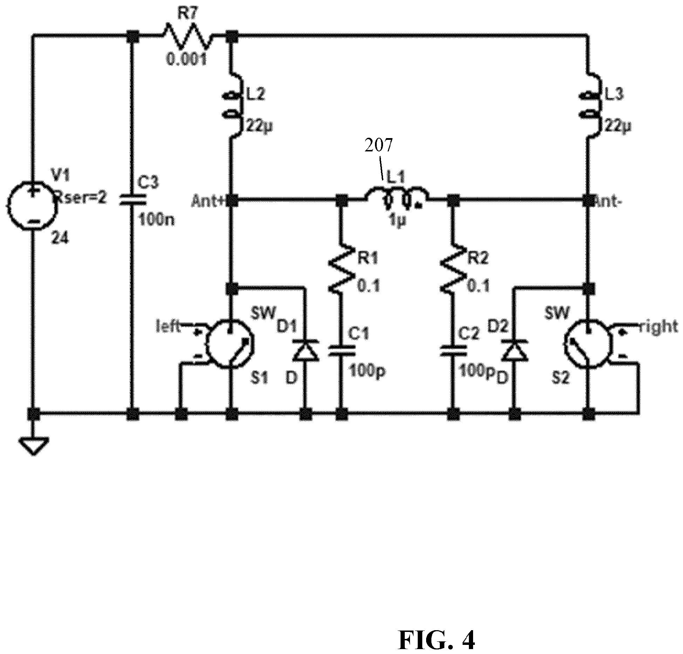

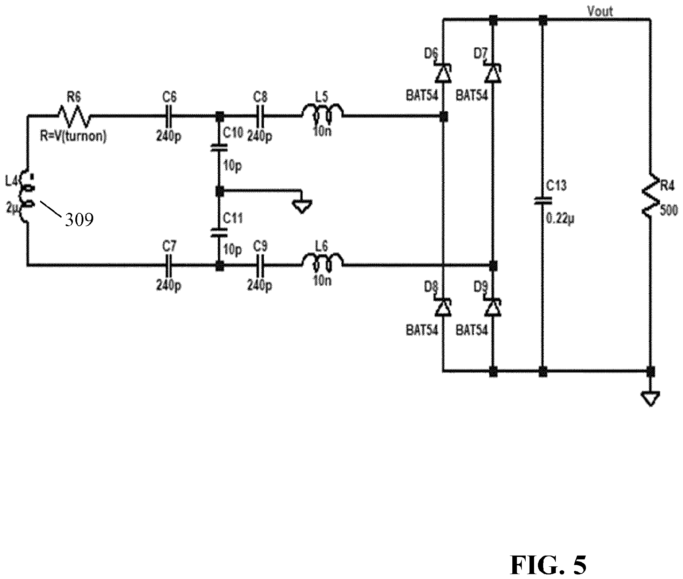

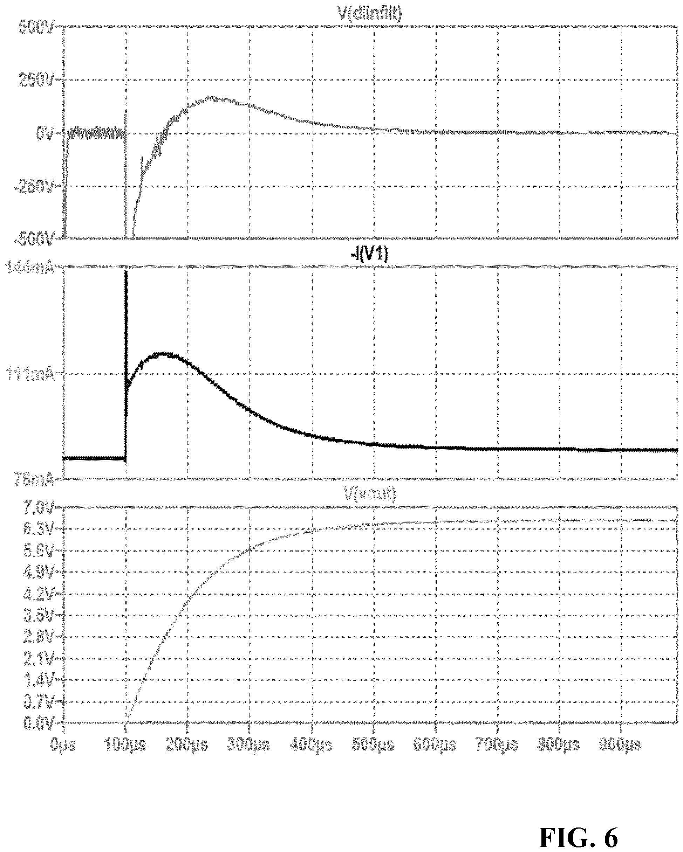

The approach may further be clarified in consideration of the exemplary power extraction paths/circuits of FIGs. 4 and 5. FIG. 4 illustrates an example of an equivalent circuit of the communication carrier generating circuit of the first communicator 205. FIG. 5 illustrates an example of the power extraction/harvesting circuit of the power receiver which is arranged to extract power from the communication carrier signal. The figures further provide exemplary component values and FIG. 6 illustrates signals resulting from simulation of these circuits with the indicated component values. FIG. 6 illustrates an example of different signals when the communication carrier signal is switched on e.g. during a standby phase.

In FIG. 6, the lower graph shows the voltage over the load and over the buffer/smoothing capacitor C13, the middle graph shows the input current to the output circuit of the first communicator 205, and the upper chart shows the derivative of the input current to the output circuit of the first communicator 205.

In the example, at t=100us the communication carrier signal is switched on (e.g. due to a standby phase poll/ping operation by the power transmitter or due to the power receiver being brought into proximity of the power transmitter) and the power harvesting circuit of the power receiver starts to charge and power the RC load circuit formed by the buffer capacitor C13 and the load R4. At t=500us, the output voltage (voltage over the load and smoothing capacitor) is more or less stabilized (substantially constant). This stabilization can also be seen in the input current of the first communicator 205 output circuit. At a certain point, this input current also reaches steady state.

In particular, when considering the upper graph showing the derivative of the input current shown in the middle graph, it can be seen that after a while, the derivative/change of the input current reduces to substantially zero.

The measurer 209 may in some embodiments be arranged to measure the input current to the first communicator 205. The measurements may be performed repeatedly such as with an interval of, say 10µsec. The measurer 209 may feed the current measurement values to the detector 211. The detector 211 evaluates the measurements to determine whether a steady state criterion is met. The steady state criterion is in the example a criterion that indicates that the power extraction from the communication carrier signal has reached a steady state condition which may typically reflect that the initial charging of the capacitor has finished and that the power extracted from the communication carrier signal matches the power consumption of the powered circuit rather than charging the buffer capacitor.

In the specific example, the detection criterion may for example consider that a steady state condition has occurred when the input current to the output circuit of the first communicator 205 falls below a given value/threshold. In scenarios where the current consumption of the power receiver communication circuit being powered is much smaller than the current charging the capacitor, it may be a reliable test to simply detect whether the measured current falls below a given level. For example, for the situation of FIG. 6, the steady state criterion may simply be a requirement that the input current falls below 90 mA. In the example, when the current falls below this threshold, the voltage over the load and buffer capacitor is close to the final value and sufficient to allow the communication circuit to operate thereby allowing communication between the power transmitter and power receiver to be established.

In many embodiments, a more accurate detection may be possible by considering the change in the impedance property rather than the absolute value. For example, in many embodiments, the detection criterion may require that the measured values of the impedance property vary by less than a given threshold/value for a given duration. For example, in the example of the scenario represented in FIG. 6, the detection criterion may require that the input current varies by less than e.g. 3 mA for at least 50µs.

In some embodiments, the detector 211 may be arranged to determine an indication of the derivative of the impedance property measurements. For example, the difference between subsequent measurements may be determined and the resulting differences may e.g., be low pass filtered to remove noise. When the filtered difference falls below a threshold, the steady state criterion may be met. It will be appreciated that in some cases, the difference values may be used directly without any filtering.

Once the detector 211 has detected that the steady state criterion is met, it may provide information of the detection to the power transmitter controller 203 which in response proceeds to perform communication with the power receiver. The power transmitter controller 2035 may in some embodiments include some time offset or delay but this may be substantially shorter than a predetermined worst case delay to guarantee that communication would be possible for all possible power receivers. Thus, when it is detected that the steady state is reached, and specifically that the buffer capacitor is charged and stable, the communication between the power receiver and power transmitter is started.

The approach may reflect that communication can only be started when the communication circuit (e.g. a suitable microcontroller) of the power receiver is operating and thus it is required to be powered. In general, this may be the case when the output/buffer voltage of the power receiver power path has stabilized. This steady state condition is detected from the power transmitter side by exploiting that the impedance of the transmitter communication coil varies during the charging of the buffer capacitor and stabilizes when steady state reached.

The approach may thus by live real time measurements determine when the power receiver has been sufficiently powered/charged to support communication and without this including the introduction of worst case delays. Rather, it may be detected that the power receiver is ready to communicate thereby allowing this to be initiated much earlier.

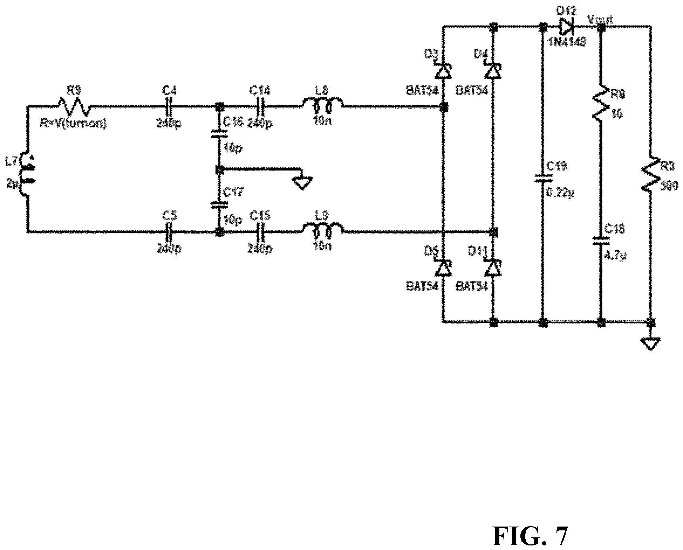

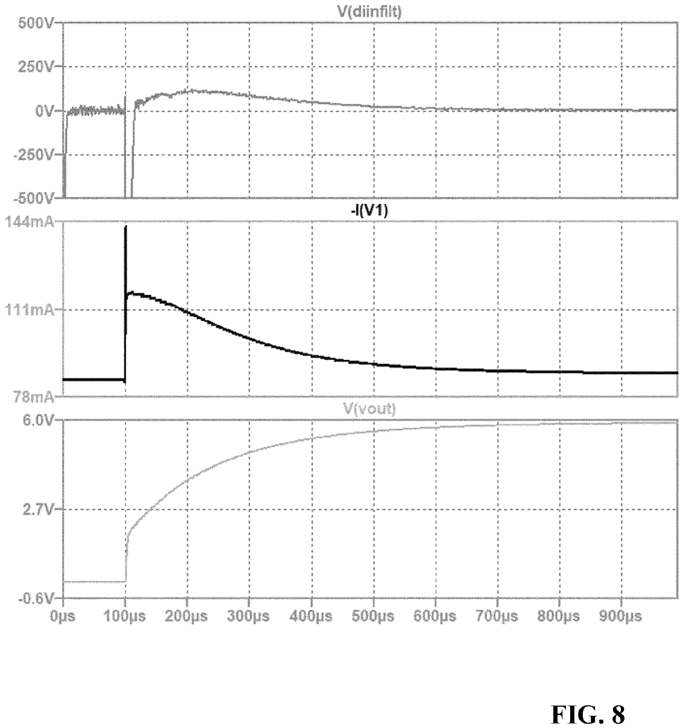

The approach is not limited to a linear load but area also appropriate for various non-linear loads. FIG. 7 illustrates a modification of the circuit of FIG. 5 to include a non-linear load (diode D12 introduces a non-linearity) and FIG. 8 illustrates the signals corresponding to those of FIG. 6. As illustrated, the same behavior can be seen and similar solid state criteria can often be used.

As mentioned, the approach may be particularly advantageous in many standby phases, such as a Connected Phase of a Ki wireless power transfer system. In such a phase, no power transfer may be performed via the power transfer signal. However, the power transmitter may be required to wake up and initiate power transfer at any given time. For example, a power receiving device, such as a kitchen appliance, may be positioned for power transfer but switched off so that no power transfer is performed. The kitchen appliance may remain in place and the system may enter a standby phase in which the power transfer signal is switched off completely. However, the power transmitter may be arranged to switch between power down time intervals in which no communication carrier signal is generated and communication time intervals in which a communication carrier signal is generated. The power down time intervals may have much longer duration than the communication time intervals, e.g. it may typically be 2, 5, 10 or even 50 times longer. Indeed, in many embodiments, the communication time intervals may be quite short., such as typically no more than 1 msec, 10msec, 50 msec, or 100msec.

The communication time intervals may essentially be introduced to allow the power transmitter to briefly wake-up and seek to communicate with the power receiver and to switch back off unless the communication indicates that the power receiver is requesting power, in which case power transfer may be initialized. Such an operation may often be referred to as the power transmitter pinging or polling the power receiver.

In such cases, the power transmitter may be arranged to start generating the communication carrier signal when the communication time intervals start and proceed to use the described approach to determine when communication to the power receiver can be started. Thus, as soon as the power transmitter detects that steady state has been reached, it initiates the communication. If the power receiver requests power transfer, the power transmitter may proceed to initialize a new power transfer. If not, the power transmitter may proceed to end the communication time interval as soon as possible and may switch off the communication carrier signal. The approach allows for the duration of the communication time intervals to be adapted to the specific conditions and the specific power receiver. Rather than requiring the communication time intervals to have a duration that is predetermined and fixed, and sufficiently large to accommodate worst case situations, the duration of the communication time intervals can dynamically be reduced and often minimized for the specific conditions. Thus, the duration in which the communication carrier signal is generated can be reduced substantially resulting in a substantial reduction in the standby phase power consumption.

As described above, the impedance property may specifically be determined as a value of the input current to the output stage of the communication driver (including being measured as a current to any circuit/circuitry that includes the circuit generating the drive signal for the communication coil). The input current directly reflects the power extracted by the power receiver and provides a reliable parameter for detecting steady state conditions. A particular advantage of using the input current is that it is typically substantially a DC signal which facilitates the measurement process.

However, in other embodiments other properties may be measured. For example, in many embodiments, the current and/or voltage over the communication coil may be measured and used to detect the onset of the steady state conditions. In such cases, the measurer 209 may specifically measure the amplitude of the current and/or voltage through/over the communication coil 207. The amplitude of this current/voltage tends to show a characteristic that directly reflects the power extracted by the power receiver and thus changes with the power receiver reaching the steady state.

In more detail, the coil voltage and current provide a direct indication of the loading by the power receiver. Since the impedance of the communication coil 207 is directly coupled to the communication coil 307, it shows the impedance of the load circuit directly and provides a clear indication of the charge of the buffer capacitor. The input current includes the losses of the switches and other components of the amplifier circuit. Considering/measuring the coil voltage and/or current is often a bit more difficult due to the high frequencies present. However, it tends to provide direct feedback without any disturbing parameters, such as losses.

It will be appreciated that different steady state criteria may be used in different embodiments.

As previously mentioned, in some embodiments the steady state criteria may for example be that the measured impedance property crosses a threshold, such as e.g. the input current or communication coil voltage/current amplitude falling below a predetermined threshold. This may provide a low complexity, and in many scenarios a reliable detection that a sufficiently steady state condition for allowing communication to be initiated has been reached.

As mentioned, in many embodiments, improved detection may often be achieved by the steady state criterion being based on a consideration of a change/variation, and specifically a derivative or rate of change, of the impedance property.

In many embodiments, a particularly suitable steady state criterion is one that consists in (or includes the requirement that) the variation of the impedance property must be below a given threshold for a given duration. The exact threshold and duration will depend on the individual parameters, and on the specific impedance property that is being measured.

For example, in some embodiments, the maximum and minimum values of the measured impedance property within a given time interval is measured and if this difference falls below a given value, then the steady state criterion may be considered to be met. As another example, the difference between the current measured value and the previously measured value is calculated and if this remains below a given value for a given duration, the steady state criterion may be considered to have been met.

In many embodiments, advantageous operation is achieved by requiring a suitably constant (sufficiently low variation) for a duration of no less than 10usec and no more than 100usec. In particular, in many embodiments, particularly advantageous performance has been found to occur for a duration in the interval from 40usec to 60usec.

For embodiments wherein the impedance measurement is an amplitude of the voltage over the communication coil 207, it has been found that the threshold variation required for the given duration may in many practical implementations and scenarios be no less than 2V (or often e.g. 5V or 10V) and no more than 100V (or often 50V or 20V). In particular, in many embodiments, particularly advantageous performance has been found to occur for a duration in the interval from 5V to 20V.

For embodiments wherein the impedance measurement is a current through the communication coil 207, it has been found that the threshold variation required for the given duration may in many practical implementations and scenarios be no less than 10mA and no more than 2A. In particular, in many embodiments, particularly advantageous performance has been found to occur for a duration in the interval from 20mA to 100mA.

For embodiments wherein the impedance measurement is an input current to an output stage of the first communicator 205, it has been found that the threshold variation required for the given duration may in many practical implementations and scenarios be no less than 5mA and no more than 400mA. In particular, in many embodiments, particularly advantageous performance has been found to occur for a duration in the interval from 10 mA to 50 mA.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

It will be appreciated that the reference to a preferred value does not imply any limitation beyond it being the value determined in the foreign object detection initialization mode, i.e. it is preferred by virtue of it being determined in the adaptation process. The references to a preferred value could be substituted for references to e.g. a first value.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

## Claims

1. A power transmitter (101) for wirelessly providing power to a power receiver (105) via an inductive power transfer signal, the power transmitter (101) comprising:
a power transfer coil (103) arranged to generate the power transfer signal;
a power transfer driver (201) arranged to generate a power transfer drive signal for the power transfer coil (103) to generate the power transfer signal during a power transfer phase;
a communication coil (207) arranged to generate a communication carrier signal;
a communication unit (205) arranged to communicate with the power receiver (105) using modulation of the communication carrier signal, the communication unit (205) being arranged to generate a drive signal for the communication coil (207) to generate the communication carrier signal;
a measurer (209) arranged to measure an impedance property for the communication coil, the impedance property being a property dependent on an impedance of the communication coil;
a detector (211) arranged to detect a steady state condition in response to the impedance property meeting a steady state criterion; and
a controller (203) arranged to initialize communication in response to the detection of the steady state condition.

2. The power transmitter of claim 1 wherein the steady state condition includes a requirement that a variation of the impedance property meets a steady state requirement.

3. The power transmitter of claim 1 or 2 wherein the steady state condition includes a requirement that a derivative of the impedance property meets a steady state requirement.

4. The power transmitter of any previous claim wherein the impedance property is a level of an input current to a circuit of the communication unit (205).

5. The power transmitter of any previous claim wherein the impedance property is a current amplitude for a current of the communication coil (207).

6. The power transmitter of any previous claim wherein the impedance property is a voltage amplitude of a voltage of the communication coil (207).

7. The power transmitter of any previous claim wherein the criterion comprises a requirement that a variation of the impedance property is below a given threshold for a given duration.

8. The power transmitter of claim 7 wherein the given duration is no less than 10 psec and no more than 100 µsec.

9. The power transmitter of claim 7 or 8 wherein the impedance property is an amplitude of a voltage of the communication coil and the given threshold is no less than 2V and no more than 100V.

10. The power transmitter of claim 7 or 8 wherein the impedance property is an amplitude of a current through the communication coil (207) and the given threshold is no less than 10mA and no more than 2A.

11. The power transmitter of claim 7 or 8 wherein the impedance property is an input current to the communication unit (205) and the given threshold is no less than 5mA and no more than 400mA.

12. The power transmitter of any previous claim wherein the power transmitter is arranged to operate in a standby phase in which no power transfer is performed via the power transfer signal and in which operation is switched between power down time intervals in which no communication carrier signal is generated and communication time intervals in which the communication carrier signal is generated, and where the measurer (209) is arranged to measure the impedance property, the detector (211) is arranged to detect the steady state condition, and the controller (203) is arranged to initialize communication during communication time intervals of the standby phase.

13. The power transmitter of any previous claim wherein the communication unit (205) is arranged to communicate with the power receiver (105) using Near Field Communication, NFC.

14. A wireless power transfer system comprising for wirelessly providing power to a power receiver (105), the wireless power transfer system comprising a power transmitter (101) in accordance with any of the previous claims 1-13.

15. A method of operation for a power transmitter (101) wirelessly providing power to a power receiver (105) via an inductive power transfer signal, the power transmitter (101) comprising:
a power transfer coil (103) generating the power transfer signal;
generating a power transfer drive signal for the power transfer coil (103) to generate the power transfer signal during a power transfer phase;
a communication coil (207) generating a communication carrier signal;
generating a drive signal for the communication coil (207) to generate the communication carrier signal;
communicating with the power receiver (105) using modulation of the communication carrier signal;
measuring an impedance property for the communication coil (207), the impedance property being a property dependent on an impedance of the communication coil (207);
detect a steady state condition in response to the impedance property meeting a steady state criterion; and
initializing communication in response to the detection of the steady state condition.
